# EUROPÄISCHE PATENTSCHRIFT

(11) **EP 0 733 427 B1**
(45) Veröffentlichungstag und Bekanntmachung des Hinweises auf die Patenterteilung: **24.11.1999**
(21) Anmeldenummer: 95119775.5
(22) Anmeldetag: 15.12.1995
(51) Int. Cl.: B23D 31/00, B23D 35/00

(54) **Schere zum Trennen von inbesondere Schrott**
Apparatus for cutting scrap
Dispositif pour couper des déchets métalliques

(30) Priorität: 16.12.1994 DE 4445014
(43) Veröffentlichungstag der Anmeldung: 25.09.1996
(73) Patentinhaber: HENSCHEL RECYCLING TECHNIK GMBH, 34127 Kassel (DE)
(72) Erfinder: Zöller, Georg, D-34128 Kassel (DE); Ulloth, Norbert, D-34246 Vellmar (DE)
(74) Vertreter: Dahlkamp, Heinrich-Leo, Dipl.-Ing.

(56) Entgegenhaltungen:
- EP-A- 0 100 767
- DE-A- 3 940 717
- GB-A- 2 074 491

## Beschreibung

Die Erfindung betrifft eine Schere zum Trennen von insbesondere Schrott mit einem Scherenständer, in den ein erstes Messer eingefügt ist, und mit einem relativ zum Scherenständer verschiebbaren Messerschlitten, der ein zweites Messer trägt, gemäß dem Oberbegriff der Ansprüche 1 und 7.

Bei vorgenannten Scheren werden die Messer mit Spiel in die Messeraufnahmen des Scherenständers und des Messerschlittens eingefügt. Während des Betriebes dieser Scheren wirken beim Trennvorgang erhebliche Kräfte auf die Messer, wobei eine plastische Verformung der Messer eintritt. Im Ergebnis dieser Verformung sitzen die Messer in vorgespanntem Zustand in den Messeraufnahmen des Scherenständers bzw. des Messerschlittens. Hierdurch gestaltet sich der beispielsweise bei Verschleiß der Messer notwendige Ausbau derselben kompliziert.

Aus der DE-PS 39 40 717 und weiteren Schriften ist bekannt, daß die Stirnflächen der Messer senkrecht zur Messerebene stehen und mit zu diesen Stirnflächen parallelen Flächen der Messeraufnahmen korrespondieren. Infolge einer solchen Ausbildung der Messer und Anordnung derselben in den Messeraufnahmen muß eine relativ hohe Kraft über den gesamten Ausbauweg des Messers, der der Messerdicke entspricht, aufgebracht werden.

Der Erfindung liegt daher die Aufgabe zugrunde, eine Schere der eingangs genannten Art dahingehend weiterzuentwickeln, daß eine Vereinfachung beim Ausbau der Messer und damit beim Messerwechsel erzielt wird.

Diese Aufgabe wird bei einer gattungsgemäßen Schere dadurch gelöst, daß das erste und/oder das zweite Messer bezogen auf die Messerebene in Messerausbaurichtung betrachtet über Messerstirnflächen verfügen, die nach außen geneigt ausgebildet sind.

Die Erfindung ist mit dem Vorteil verbunden, daß nur kurzzeitig eine Kraft zur Überwindung der Haftreibung zwischen Messer und Messeraufnahme überwunden werden muß, um das Messer vollständig von der Messeraufnahme zu lösen. Auch muß die Kraft zum Lösen des Messers nicht symmetrisch in das Messer eingebracht werden, da ein Verkanten des Messers nicht zu einem Verklemmen in der Messeraufnahme führen kann.

Desweiteren besteht eine Lösung der Aufgabe der Erfindung darin, daß die im Messerquerschnitt entstehende Kontur mindestens einer Messerstirnfläche mindestens eines Messers in ihrer Krümmung von der korrespondierenden Kontur der Messeraufnahme abweicht.

Eine solche Lösung erbringt insbesondere den Vorteil, daß nur ein Teil der beim Trennvorgang entstehenden und auf die Messer übertragenen Kräfte zu einer plastischen Verformung der Messer führen und ein anderer Teil der Kräfte in den Bereichen, in denen ein Kontakt zur Messeraufnahme nicht hergestellt wird, elastisch in die Messer eingetragen und von diesen wieder abgegeben werden.

In zweckmäßiger Ausgestaltung der Erfindung verläuft die im Querschnitt des Messers entstehende Kontur mindestens einer Messerstirnfläche bezogen auf das Messer konkav.

Alternativ hierzu ist es möglich, der vorgenannten Kontur mindestens einer Messerstirnfläche einen konvexen Verlauf zu geben.

Eine weitere sehr fertigungsgünstige Möglichkeit für die Messergestaltung besteht darin, daß die im Querschnitt des Messers entstehende Kontur mindestens einer Messerstirnfläche eine Gerade ist und mit einer geraden Kontur der Messeraufnahme zusammenwirkt.

In vorteilhafter Ausgestaltung der Erfindung bildet dabei die Gerade mit einer auf der Messerebene gedachten Senkrechten einen Winkel < 15°.

Um ein hohes Maß an Selbsthemmung zu erreichen, d.h. um einen hohen Anteil der Gesamtkraft, die auf die Messer beim Trennen des Schrottes einwirkt, direkt in die Messeraufnahmen einzutragen, ist es zweckmäßig, den vorbezeichneten Winkel zwischen 2° und 8° zu wählen.

Eine zweckmäßige Ausführung dieser Lösung besteht darüber hinaus in einem Messer mit rechteckigem Querschnitt, wobei die mit den jeweiligen Stirnflächen des Messers korrespondierene Kontur der Messeraufnahme gekrümmt ist.

In einer weiteren zweckmäßigen Ausführungsform ist die Messeraufnahme mit einer Aussparung rechteckigen Querschnitts für das Messer versehen, wobei der Kontur der Stirnflächen des Messers eine endliche Krümmung zugeordnet ist.

Die Erfindung soll nachfolgend anhand von Zeichnungen, die mögliche Ausführungsformen der Erfindung darstellen, näher erläutert werden.

Es zeigen:
- - Fig. 1: eine Prinzipdarstellung einer Schrottschere,
- - Fig. 2: einen Längsschnitt der Schrottschere gemäß Fig. 1,
- - Fig. 3: einen Horizontalschnitt einer Schere gemäß Fig. 1 im Bereich oberhalb der Untermesserbefestigung mit einteiligem Untermesser,
- - Fig. 4: eine Darstellung gemäß Fig. 3 mit mehrteiligem Untermesser,
- - Fig. 5, 6: Darstellungen gemäß Fig. 4 mit einem Freiraum zwischen Messer und Messeraufnahme infolge unterschiedlicher Krümmungen der Kontur der betreffenden Stirnflächen.

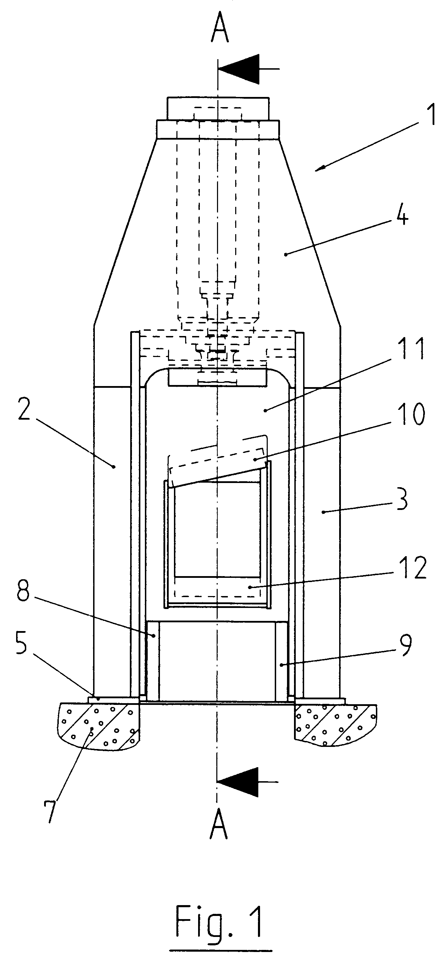

Die in Fig. 1 dargestellte Schrottschere besteht aus einem Scherenständer 1, dessen Säulen 2 und 3 oben durch ein Querhaupt 4 und unten durch eine Grundplatte 5 sowie eine Untermesserhalterung 6 zu einem starren Rahmen verbunden sind. Die Grundplatte 5 ist auf einem Fundament 7 befestigt. Die Säulen 2 und 3 des Scherenständers 1 sind mit Gleitleisten 8 und 9 versehen, in denen ein ein Obermesser 10 tragender Messerschlitten 11 vertikal verschiebbar angeordnet ist. Das schräggestellte Obermesser 10 steht beim Schervorgang in Wirkverbindung mit einem an der Untermesserhalterung 6 starr angebrachten Untermesser 12.

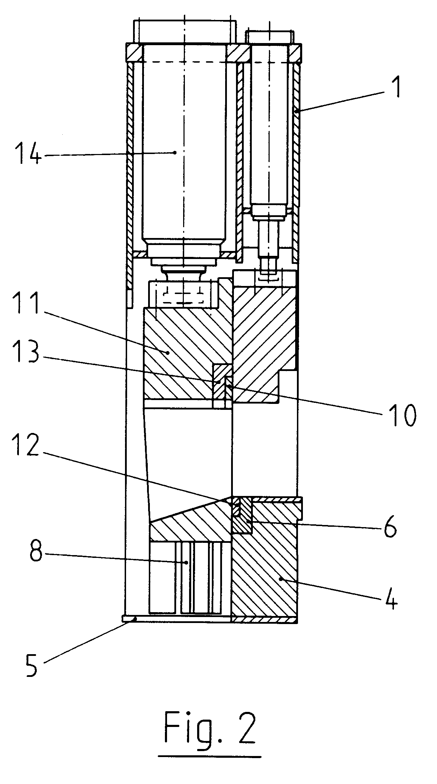

Wie aus Fig. 2 deutlich wird, befinden sich das Obermesser 10 in der Obermesserhalterung 13 und das Untermesser 12 in der Untermesserhalterung 6. Über die Messerhalterung 6, 12 werden die beim Trennvorgang des Schrottes entstehenden Kräfte direkt oder aber über den Messerschlitten 11 und eine hydraulisch wirkende Zylinder-Kolben-Einheit 14 in den Scherenständer 1 eingeleitet.

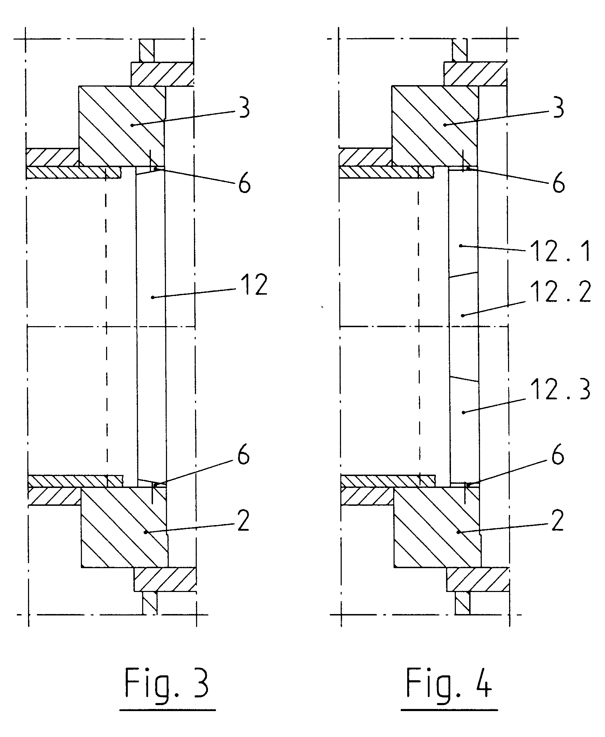

Die Kraftübertragung zwischen Obermesser 10 und Obermesserhalterung 13 bzw. zwischen Untermesser 12 und Untermesserhalterung 6 kann dabei über die gesamte Messerdicke erfolgen, wie für das Untermesser 12 in Fig. 3 in Form einer geraden Kontur dargestellt.

Kommt ein mehrteiliges Messer 10, 12 zum Einsatz, so kann die Kontaktfläche zwischen Messer 10, 12 und Messerhalterung 13, 6 senkrecht zur Messerebene verlaufen, wogegen zumindest eine Kontaktfläche zwischen den Messerabschnitten 12.1, 12.2, 12.3 nicht senkrecht auf der Messerebene steht (Fig. 4).

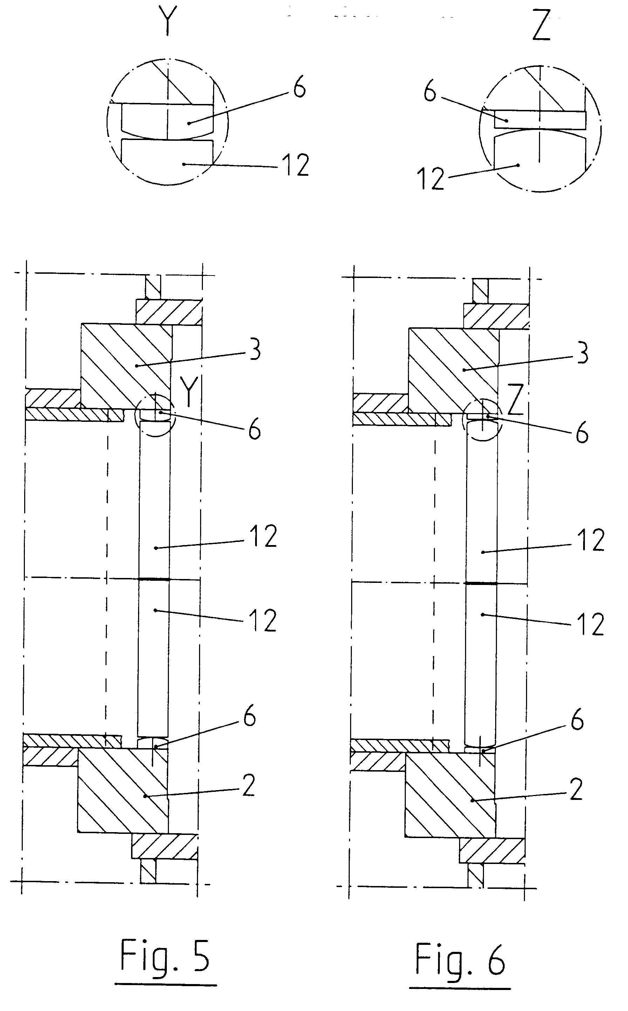

Nach einer weiteren bevorzugten Ausführungsform erstreckt sich die Kontaktfläche zwischen Messerhalterung 13, 6 und Messer 10, 12 nicht über die gesamte Messerdicke. So kann das Messer 10, 12 über Stirnflächen mit gerader Kontur verfügen und die korrespondierende Kontur der Messerhalterung 13, 6 einen gekrümmten Verlauf haben (Fig. 5). Auch liegt es im Bereich der Erfindung, die Messerhalterung 13, 6 mit einer geraden Kontur zu versehen und die korrespondierende Kontur der Messer 10, 12 gekrümmt auszuführen (Fig. 6).

Letztgenannte Realisierungsformen sind insbesondere mit dem Vorteil verbunden, daß die beim Schervorgang aufzunehmende Kraft teilweise in reversible Deformation des Messers 10, 12 und gegebenenfalls der angrenzenden Bereiche der Messeraufnahme 13, 6 umgewandelt wird, so daß bei einem Messerwechsel eine vergleichsweise geringe Kraft für den Ausbau des betreffenden Messers 10, 12 erforderlich ist.

## Patentansprüche

1. Schere zum Trennen von insbesondere Schrott, mit einem Scherenständer (1), in den ein erstes Messer (12) eingefügt ist, und mit einem relativ zum Scherenständer verschiebbaren Messerschlitten (11), der ein zweites Messer (10) trägt, wobei das erste und das zweite Messer beim Trennvorgang des Materials zusammenwirken, dadurch gekennzeichnet, daß das erste und/oder das zweite Messer (10,12) bezogen auf die Messerebene in Messerausbaurichtung betrachtet über Messerstirnflächen verfügen, die nach außen geneigt ausgebildet sind.

2. Schere nach Anspruch 1, dadurch gekennzeichnet, daß die im Querschnitt des Messers (10,12) gelegene Kontur mindestens einer Messerstirnfläche bezogen auf das Messer (10,12) konkav verläuft.

3. Schere nach Anspruch 1, dadurch gekennzeichnet, daß die im Querschnitt des Messers (10,12) gelegene Kontur mindestens einer Messerstirnfläche bezogen auf das Messer (10,12) einen konvexen Verlauf hat.

4. Schere nach Anspruch 1, dadurch gekennzeichnet, daß die im Querschnitt des Messers (10,12) gelegene Kontur mindestens einer Messerstirnfläche und die korrespondierende Kontur der Messeraufnahme (13,6) Geraden sind.

5. Schere nach Anspruch 4, dadurch gekennzeichnet, daß die Gerade mit einer auf der Messerebene gedachten Senkrechten einen Winkel < 15° bildet.

6. Schere nach Anspruch 5, dadurch gekennzeichnet, daß die Gerade mit einer auf der Messerebene gedachten Senkrechten einen Winkel zwischen 2° und 8° bildet.

7. Schere zum Trennen von insbesondere Schrott, mit einem Scherenständer (1), in den ein erstes Messer (12) eingefügt ist, und mit einem relativ zum Scherenständer verschiebbaren Messerschlitten (11), der ein zweites Messer (10) trägt, wobei das erste und das zweite Messer beim Trennvorgang des Materials zusammenwirken, dadurch gekennzeichnet, daß die im Messerquerschnitt gelegene Kontur mindestens einer Messerstirnfläche mindestens eines Messers (10,12) in ihrer Krümmung von der korrespondierenden Kontur der Messeraufnahme (13,6) abweicht.

8. Schere nach Anspruch 7, dadurch gekennzeichnet, daß das Messer (10,12) einen rechteckigen Querschnitt aufweist.

9. Schere nach Anspruch 7, dadurch gekennzeichnet, daß die Messeraufnahme (13,6) mit einer Aussparung rechteckigen Querschnitts für das Messer (10,12) versehen ist.

## Claims

1. Apparatus (shears) for cutting scrap in particular, equipped with a shears stand (1) into which a first knife (12) is inserted, and a knife sledge (11) being movable in relation to said shears stand, said knife sledge carrying a second knife (10), with the first and the second knife acting together during the process of material cutting, characterized in that the first and/or the second knife (10,12) when viewed in relation to the knife plane in the direction of knife disassembly dispose of knife front faces inclined outwardly.

2. Apparatus (shears) according to Claim 1, characterized in that the contour lying in the cross-section of said knife (10,12) of at least one knife front face runs in concave direction in relation to said knife (10,12).

3. Apparatus (shears) according to Claim 1, characterized in that the contour lying in the cross-section of said knife (10,12) of at least one knife front face runs in convex direction in relation to said knife (10,12).

4. Apparatus (shears) according to Claim 1, characterized in that the contour lying in the cross-section of said knife (10,12) of at least one knife front face and the corresponding contour of the knife take-up (13,6) are straight lines.

5. Apparatus (shears) according to Claim 4, characterized in that the straight line together with a vertical line imagined on the knife plane forms an angle of < 15°.

6. Apparatus (shears) according to Claim 5, characterized in that said straight line together with a vertical line imagined on the knife plane forms an angle of between 2° and 8°.

7. Apparatus (shears) for cutting scrap in particular, equipped with a shears stand (1) into which a first knife (12) is inserted, and a knife sledge (11) being movable in relation to said shears stand, said knife sledge carrying a second knife (10), with the first and the second knife acting together during the process of material cutting, characterized in that the contour lying in the knife cross-section of at least one knife front face of at least one knife (10,12) deviates in its curvature from the corresponding contour of said knife take-up (13,6).

8. Apparatus (shears) according to Claim 7, characterized in that said knife (10,12) is rectangular in its cross-section.

9. Apparatus (shears) according to Claim 7, characterized in that said knife take-up (13,6) is provided with a recess of a rectangular cross-section for said knife (10, 12).

## Revendications

1. Dispositif pour couper des déchets métalliques avec un porte-cisaille (1) dans lequel est inséré un premier couteau (12), et avec un coulisseau pour couteau (11) déplaçable par rapport au porte-cisaille, ledit coulisseau portant un deuxième couteau (10), le premier et le deuxième couteau concourant lors de l'opération de coupe du matériau, caractérisé en ce que par rapport au plan du couteau vu dans le sens de construction du couteau, le premier et/ou le deuxième couteau (10, 12) possèdent des têtes de coupe avant inclinées vers l'extérieur.

2. Dispositif pour couper des déchets métalliques selon la revendication 1 caractérisé en ce que le contour d'au moins une tête de coupe du couteau situé dans la section transversale du couteau (10, 12) a une forme concave par rapport au couteau (10, 12).

3. Dispositif pour couper des déchets métalliques selon la revendication 1 caractérisé en ce que le contour d'au moins une tête de coupe du couteau situé dans la section transversale du couteau (10, 12) a une forme convexe par rapport au couteau (10, 12).

4. Dispositif pour couper des déchets métalliques selon la revendication 1 caractérisé en ce que le contour d'au moins une tête de coupe du couteau situé dans la section transversale du couteau (10, 12) et le contour correspondant du logement du couteau (13, 6) sont des lignes droites.

5. Dispositif pour couper des déchets métalliques selon la revendication 4 caractérisé en ce que la ligne droite forme un angle de < 15° avec une verticale imaginaire sur le plan du couteau.

6. Dispositif pour couper des déchets métalliques selon la revendication 5 caractérisé en ce que la ligne droite forme un angle entre 2° et 8° avec une verticale imaginaire sur le plan du couteau.

7. Dispositif pour couper des déchets métalliques avec un porte-cisaille (1) dans lequel est inséré un premier couteau (12), et avec un coulisseau pour couteau (11) déplaçable par rapport au porte-cisaille, ledit coulisseau portant un deuxième couteau (10), le premier et le deuxième couteau agissant en commun lors de l'opération de coupe du matériau, caractérisé en ce que le contour d'au moins une tête de coupe d'au moins un couteau (10, 12) situé dans la section transversale du couteau diffère dans sa courbe du contour correspondant du logement du couteau (13, 6).

8. Dispositif pour couper les déchets métalliques selon la revendication 7 caractérisé en ce que le couteau (10, 12) présente une section transversale rectangulaire.

9. Dispositif pour couper les déchets métalliques selon la revendication 7 caractérisé en ce que le logement du couteau (13, 6) est muni d'un évidement de section transversale rectangulaire pour le couteau (10, 12).
